# EUROPÄISCHE PATENTSCHRIFT

(11) **EP 3 637 085 B1**
(45) Veröffentlichungstag und Bekanntmachung des Hinweises auf die Patenterteilung: **09.12.2020**
(21) Anmeldenummer: 18200207.1
(22) Anmeldetag: 12.10.2018
(51) Int. Cl.: G01B 21/24, G01M 17/10

(54) **VERFAHREN ZUM RADIALEN AUSRICHTEN VON RADSÄTZEN VON SCHIENENFAHRZEUGEN**
METHOD FOR RADIAL ALIGNMENT OF WHEEL SETS OF RAILWAY VEHICLES
PROCÉDÉ D'ALIGNEMENT RADIAL DES TRAINS DE ROUES DES VÉHICULES FERROVIAIRES

(43) Veröffentlichungstag der Anmeldung: 15.04.2020
(73) Patentinhaber: HEGENSCHEIDT-MFD GmbH, 41812 Erkelenz (DE)
(72) Erfinder: NAUMANN, John Oliver, 41489 Wassenberg (DE); THOLEN, Sascha, 52525 Waldfeucht (DE); MÜLLER, Karl, 41812 Erkelenz (DE)
(74) Vertreter: Rausch Wanischeck-Bergmann Brinkmann

(56) Entgegenhaltungen:
- EP-A1- 2 402 227
- AU-B2- 2015 261 670
- CN-A- 106 769 116
- DE-A1-102013 111 526
- ATTIVISSIMO F ET AL: "A Railway Measurement System to Evaluate the Wheel-Rail Interaction Quality", IEEE TRANSACTIONS ON INSTRUMENTATION AND MEASUREMENT, IEEE SERVICE CENTER, PISCATAWAY, NJ, US, Bd. 56, Nr. 5, 1. Oktober 2007 (2007-10-01), Seiten 1583-1589, XP011192296, ISSN: 0018-9456, DOI: 10.1109/TIM.2007.903583

## Beschreibung

Die vorliegende Erfindung betrifft ein Verfahren zum radialen Ausrichten von Radsätzen von Schienenfahrzeugen relativ zu einem Koordinatensystem einer Radsatzdiagnose- und/oder Radsatzbearbeitungsmaschine, wobei ein Radsatz zwei auf einer gemeinsamen Achse mit zueinander weisenden Radrücken angeordnete Räder umfasst.

Derartige Verfahren werden im Stand der Technik benötigt, um die Radsätze von Schienenfahrzeugen zu analysieren oder zu bearbeiten.

Die Räder von Schienenfahrzeugen unterliegen der ständigen Überwachung, Bearbeitung und Nachbearbeitung. Darunter fallen Vorgänge wie Drehen oder Walzen sowie Analyse beispielsweise aus sicherheitstechnischen Gründen.

Die Räder von Schienenfahrzeugen umfassen Laufflächenbereiche und Spurkränze. Sie unterliegen massiven Belastungen. Die Abrollbewegungen auf Schienen führen zu Materialumwälzungen und Deformationen. Diese müssen regelmäßig überwacht und ggf. nachbearbeitet werden.

Dazu ist es bekannt, die Radsätze auf Maschinen zu positionieren, wobei jedes Rad abgestützt, zentriert und ggf. angetrieben wird.

Im Stand der Technik sind Maschinen bekannt, bei welchen die Räder oberhalb der Maschine positioniert werden. Es handelt sich um sogenannte Unterflurmaschinen. Die Räder können im eingebauten Zustand, also am Wagon oder Zug befindlich, im ausgebauten Zustand, also beispielsweise durch eine Achse verbunden oder, im Falle von Drehgestellen bestimmter Art, einzeln aufgehängt sein. Im letzteren Falle sind die Räder entlang einer virtuellen Welle ausgerichtet.

Da es sowohl bei den Analysen als auch bei den Bearbeitungen darum geht, Abweichungen der Radkontur von Sollvorgaben festzustellen und ggf. durch Bearbeitungen zu beheben, ist es Wesentlich, dass die Räder eine exakte Ausgangsposition relativ zur Maschine haben. D.h., die Koordinatensysteme der Maschine einerseits und des Radsatzes andererseits müssen zueinander synchronisiert werden.

Das Koordinatensystem einer Maschine ist ein dreidimensionales Koordinatensystem, wobei eine Richtung durch die Längsrichtung der Schienen vorgegeben ist. Eine zweite, in der gleichen Ebene befindliche Koordinate liegt auf einer Verbindungslinie auf dem Schienenpaar. Die dritte Achse wiederum steht senkrecht auf dieser Ebene.

Das Koordinatensystem eines Radsatzes ist ebenfalls dreidimensional, wobei eine Ebene durch ein zweidimensionales Koordinatensystem definiert wird, welches auf der Rückseite eines Rades liegt und seinen Ursprung im Mittelpunkt des Rades hat. Die dritte Koordinate steht darauf senkrecht und läuft entlang der Welle bzw. der virtuellen Welle.

Positioniert man nun einen Radsatz auf den Schienen einer Analyse- oder Bearbeitungsmaschine, so wird infolge der durch Betrieb veränderten Radkontur eine Abweichung zwischen beiden Koordinatensystemen gegeben sein.

Ziel ist es, die Koordinatenrichtung die die Tiefenerstreckung des Rades beschreibt, also senkrecht auf der parallel zum Radrücken liegenden Ebene steht, parallel ist zu der Ebene der Radbearbeitungsmaschine, die durch die Längsrichtung und Querrichtung des Schienensystems vorgegeben ist. Darüber hinaus soll die parallel zum Radrücken liegende Ebene eines jeden Rades auf der Ebene des Schienensystems senkrecht stehen und parallel zur Schienenlängsrichtung verlaufen.

Da aufgrund des Betriebes die Räder ebenfalls relativ zueinander unterschiedlich abgearbeitet sein können, was ja zum Zwecke der Bearbeitung gerade festgestellt werden soll, können nach Ausrichtung eines Radkoordinatensystems zum Maschinensystem die Abweichungen des anderen festgestellt und daraus die Analysewerte oder die Bearbeitungswerte ermittelt werden.

Im Stand der Technik hat man zum Zwecke der Ausrichtung von Radsätzen zu den entsprechenden Maschinen eine Raddurchmesserbestimmung durchgeführt. Ausgehend vom Raddurchmesser ergibt sich eine, am oberen Scheitelpunkt der Räder liegende Ebene, die parallel zur Ebene des Schienensystems ist. Aus der Durchmessermessung ergibt sich dann, welches Rad zur Erreichung der oberen Scheitelebene angehoben werden muss. Auf diese Seite wird der Radsatz dann durch das entsprechende Rollensystem der Bearbeitungs- oder Analysemaschine angehoben.

Im Stand der Technik hat sich gezeigt, dass diese Vorgehensweise zum einen sehr ungenau ist, zum anderen aber, um sie wirklich exakt durchzuführen, einen sehr langen Zeitraum und eine Vielzahl von Messungen erforderlich macht. Die Überprüfung und ggf. Nachbearbeitung von Radsätzen muss jedoch so schnell wie möglich durchführbar sein. Zum einen sind die entsprechenden Analyse- und Bearbeitungsmaschinen sehr teuer, zum anderen wächst weltweit der Bahnbestand, so dass die Auslastung der Analyse- und Bearbeitungsmaschinen äußerst hoch ist Radsatzdiagnose- und/oder Radsatzbearbeitungsmaschine für Radsätze von Schienenfahrzeugen sowie Prüfverfahren werden z.B. in den Dokumenten CN106769116 und EP2 402227 beschrieben.

Ausgehend vom vorbeschriebenen Stand der Technik liegt der vorliegenden Erfindung die **Aufgabe** zugrunde, ein Verfahren zu radialen Ausrichtung von Radsätzen von Schienenfahrzeugen relativ zu einem Koordinatensystem einer Radsatzdiagnose- und/oder Radsatzbearbeitungsmaschine vorzuschlagen, welches bei ausreichender Präzision schnell umzusetzen ist.

Zur technischen **Lösung** dieser Aufgabe wird ein Verfahren mit den Merkmalen des Patentanspruches 1 vorgeschlagen. Weitere Vorteile und Merkmale der Erfindung ergeben sich aus den Unteransprüchen.

Die Erfindung geht davon aus, dass ein Radsatz zwei Räder umfasst, welche relativ zueinander mit zueinander weisenden Radrücken angeordnet sind. In aller Regel sitzen sie auf einer gemeinsamen Achse bzw. Welle oder sind, wie dies bei bestimmten Arten von Drehgestellen Stand der Technik ist, einzeln aufgehängt, so dass sie auf einer virtuellen Welle relativ zueinander positioniert sind.

In einem ersten Schritt wird dieser Radsatz auf einer Arbeitsposition der Maschine positioniert. In aller Regel handelt es sich um ein Stück eines Schienensystems mit zwei parallel zueinander verlaufenden und hinsichtlich der Höhe zueinander ausgerichteten Schienen.

Weiterhin wird in einem angenommenen Radmittelpunkt eines jeden Rades ein Koordinatensystem festgelegt. Die X-Achse wird vom Radmittelpunkt vertikal verlaufend angeordnet und die Y-Achse horizontal. Die dadurch beschriebene Ebene liegt parallel zum Radrücken des Rades. Die senkrecht auf dem X-Y-System stehende Z-Achse beschreibt die Tiefenerstreckung des Rades. Dabei wird der jeweilige Null-Wert der beiden X-Achsen auf eine Maschinenachse bezogen. Damit sind beide X0-Punkte in Bezug auf die Maschine horizontal.

Es erfolgt anschließend die Messung des Abstandes der Radrücken zueinander und damit Festlegen der Z-Position ist Null am jeweiligen Radrücken eines jeden Rades.

Es wird eine eindeutige Z-Position für je einen Messpunkt festgelegt und je ein Messsensor auf der vorgegebenen Z-Position eines jeden Rades positioniert. Durch Messung der X-Position des jeweils definierten Messpunktes lässt sich nun feststellen, ob beide Räder die gleiche radiale Ausrichtung haben oder nicht. Es werden dann die Räder zueinander ausgerichtet, in dem eines der Räder vertikal bewegt wird, um die X-Position der Messpunkte beider Räder zueinander abzugleichen.

Auf diese Weise lässt sich sehr schnell eine radiale Ausrichtung von Radsätzen relativ zur jeweiligen Maschine durchführen.

Gemäß einem Vorschlag der Erfindung kann die Z-Position über einen Messpunkt auf einer Messkreisebene definiert werden. Das bedeutet, dass die Z-Position einen Punkt auf dem Profil definiert. Auch ist es möglich, als Z-Position einen Scheitelpunkt einer Spurkranzkuppe festzulegen. Dies ist gewissermaßen eine besondere Messkreisebene.

Zum vertikalen Positionieren eines der Räder kann das tieferstehende Rad gehoben oder das höherstehende Rad abgesenkt werden, wozu je nach Bearbeitungs- und Analysemaschine maschinenseitige Stützrollen und dgl. eingesetzt werden können.

Das mit der Erfindung beschriebene Verfahren ist ausreichend präzise und insbesondere äußerst schnell durchführbar, wobei nur ein Minimum an Sensorik und Aktuatoren notwendig sind.

Weitere Vorteile und Merkmale der Erfindung ergeben sich aus der folgenden Beschreibung anhand der Figur. Dabei zeigen:
- Fig. 1: Eine schematische Darstellung eines Radsatzes zur Erläuterung der Koordinatensysteme;
- Fig. 2: eine Darstellung gemäß Figur 1 zur Erläuterung des ersten Schritts des erfindungsgemäßen Verfahrens;
- Fig. 3: eine Darstellung mit vergrößerten Radbereichen zur Erläuterung des nächsten Schrittes des erfindungsgemäßen Verfahrens;
- Fig. 4: eine Darstellung gemäß Figur 3 zur Erläuterung des Messvorganges und
- Fig. 5: eine Darstellung gemäß Figur 3 zur Erläuterung des Ausrichtvorganges.

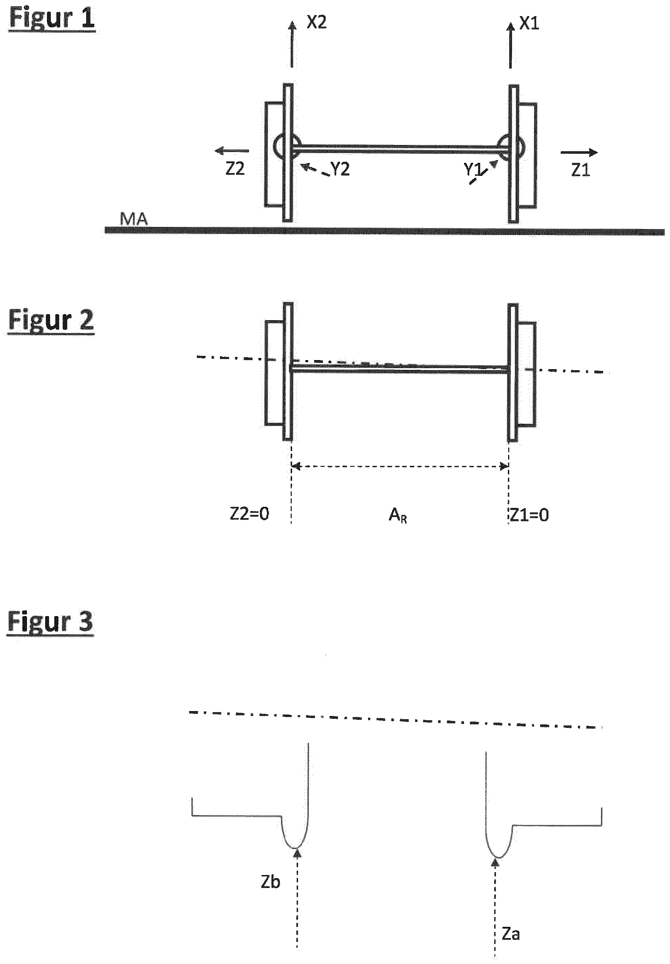

Gemäß Figur 1 ist rein stilisiert ein Radsatz mit einem linken und einem rechten Rad gezeigt, welche durch eine Achse miteinander verbunden sind. Jeweils in dem Schnittpunkt der Achse mit dem Radrücken ist ein Koordinatensystem angeordnet, wobei die Z1 und Z2-Achsen jeweils eine horizontale, X1 und X2 eine vertikale und Y1 und Y2 eine im Ursprung liegende ebenfalls horizontale Richtung bestimmen. Der jeweilige Nullpunkt der Z-Achsen liegt im jeweiligen Radrücken. Der jeweilige Nullpunkt der X-Achsen ist auf eine Maschinenachse MA bezogen und liegt im Bereich der Radmitte. Durch den Bezug auf die Maschinenachse MA liegen beide Ursprünge beider Koordinatensysteme auf einer horizontalen zumindest virtuellen Achse. Durch die Vorgabe des Nullpunktes einerseits und der X- und Z-Achsen andererseits ist auch die Y-Achse eindeutig definiert.

Zunächst wird in einem ersten Schritt gemäß Figur 2 der Abstand der Radrücken zueinander bestimmt. In diesen Positionen sind sowohl Z1 als auch Z2 Null.

Gemäß Figur 3 wird dann im gezeigten Ausführungsbeispiel auf der jeweiligen Spurkranzkuppe ein Messpunkt definiert, wobei Za = Zb ist. Das heißt, beide Messpunkte liegen in Z-Richtung des jeweiligen Koordinatensystems an der gleichen Z-Position, also Za entlang der Z1-Achse auf der gleichen Position wie Zb entlang der Z2-Achse.

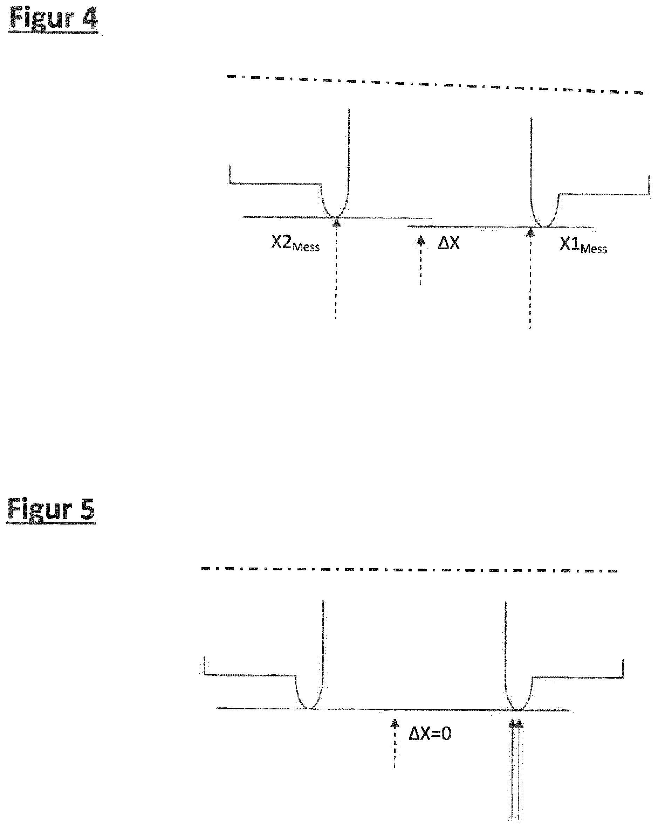

Für jeden der beiden Messpunkte Za und Zb wird dann gemäß Figur 4 der X-Wert gemessen. Es werden also X1_{Mess} und X2_{Mess} bestimmt. Die Differenz zwischen beiden ist dann ein ΔX.

Gemäß Figur 5 ist dann beispielhaft das in Bildebene rechte Rad in X-Richtung angehoben, bis das ΔX = 0 ist, also beide Räder des Radsatzes ausgerichtet sind.

Das beschriebene Ausführungsbeispiel dient nur der Erläuterung und ist nicht beschränkend.

## Patentansprüche

1. Verfahren zum radialen Ausrichten von Radsätzen von Schienenfahrzeugen relativ zu einem Koordinatensystem einer Radsatzdiagnose- und/oder Radsatzbearbeitungsmaschine, wobei ein Radsatz zwei auf einer gemeinsamen Achse mit zueinander weisenden Radrücken angeordnete Räder umfasst, mit den folgenden Schritten:
a) Positionieren des Radsatzes auf einer Arbeitsposition der Radsatzdiagnose- und/oder Radsatzbearbeitungsmaschine **gekennzeichnet durch**:
b) Festlegen eines maschinenseitigen Koordinatensystems in einem angenommenen Radmittelpunkt eines jeden Rades, wobei eine X-Achse eine vertikale, eine Y-Achse eine horizontale Erstreckung einnimmt und eine Z-Achse die sich ergebende Tiefenerstreckung des Rades beschreibt;
c) Messung des Abstandes der beiden Radrücken zueinander und Festlegen einer Z-Position = 0 für jeden Radrücken;
d) Festlegen einer eindeutigen Z-Position für je einen Messpunkt Za und Zb der beiden Räder in einem Abstand zu den Z-Positionen = 0, wobei die Messpunkte Za und Zb an der gleichen Z-Position der Koordinatensysteme der beiden Räder und in jeweiligen Nullpunkten der X-Achsen bezogen auf eine Maschinenachse als zumindest virtuelle Achse im Bereich der Radmitte liegen;
e) Positionieren je eines Messsensors auf der vorgegebenen Z-Position der Messpunkte Za und Zb;
f) Messen der x-Positionen für die Z-Positionen der Messpunkte Za und Zb;
g) Bestimmen einer Differenz ΔX aus den X-Positionen für die Z-Positionen der Messpunkte Za und Zb;
h) Ausrichten des Radsatzes durch vertikales Verschieben eines der Räder, um die X-Positionen der Messpunkte Za und Zb beider Räder abzugleichen, bis ΔX = 0 ist.

2. Verfahren nach Anspruch 1, **dadurch gekennzeichnet, dass** die Z-Position für einen Messpunkt eine Messkreisebene definiert.

3. Verfahren nach einem der vorhergehenden Ansprüche, **dadurch gekennzeichnet, dass** als Z-Position ein Scheitelpunkt einer Spurkranzkuppe festgelegt wird.

4. Verfahren nach einem der vorhergehenden Ansprüche, **dadurch gekennzeichnet, dass** zum Abgleich der X-Positionen der Messpunkte beider Räder das höher stehende Rad abgesenkt wird.

5. Verfahren nach einem der Ansprüche 1 bis 3, **dadurch gekennzeichnet, dass** zum Abgleich der X-Positionen der Messpunkte beider Räder das tieferstehende Rad angehoben wird.

## Claims

1. Method for the radial alignment of wheelsets of rail vehicles relative to a coordinate system of a wheelset diagnosis and/or wheelset reprofiling machine, wherein a wheelset comprises two wheels arranged on a common axle with wheel backs facing each other, with the following steps:
a) Positioning of the wheelset in a working position of the wheelset diagnosis and/or wheelset reprofiling machine, **characterised by**:
b) Specifying a machine-side coordinate system in an assumed central point of each wheel, whereby an X axis takes up a vertical, a Y axis a horizontal extension and a Z axis describes the resulting depth extension of the wheel;
c) Measurement of the distance between the two wheel backs and specification of the Z position = 0 on the respective wheel back;
d) Definition of a clear Z position for one measuring point Za and one measuring point Zb of the two wheels at a distance from the Z positions = 0, whereby measuring points Za and Zb are located at the same Z position of the coordinate systems of the two wheels and at respective zero points of the X axis relative to a machine axis as at least a virtual axis in the area of the wheel centre;
e) Positioning of one measuring sensor each at the specified Z position of measuring points Za and Zb;
f) Measuring of the X positions for the Z positions of measuring points Za and Zb;
g) Determining a difference ΔX from the X positions for the Z positions of measuring points Za and Zb:
h) Alignment of the wheelset by vertically moving one of the wheels in order to align the X positions of measuring points Za and Zb of both wheels, where ΔX = 0.

2. Method according to claim 1, **characterised in that** the Z position for a measuring point defines a taping line.

3. Method according to one of the preceding claims, **characterised in that** an apex of a wheel flange cap is defined as the Z position.

4. Method according to one of the preceding claims, **characterised in that** the higher wheel is lowered in order to align the X positions of the measuring points of both wheels.

5. Method according to one of claims 1 to 3, **characterised in that** the lower wheel is lifted in order to align the X positions of the measuring points of both wheels.

## Revendications

1. Procédé pour l'alignement radial d'essieux montés de véhicules sur rails par rapport à un système de coordonnées transmis par une machine de diagnostic et/ou d'usinage d'essieux montés, dans lequel un essieu monté comprend deux roues disposées sur un axe commun avec les parties arrière des roues tournées l'une vers l'autre, avec les étapes décrites ci-après :
a) Positionnement de l'essieu monté sur une position de travail de la machine de diagnostic et/ou d'usinage d'essieux montés, **caractérisé par** :
b) La définition d'un système de coordonnées côté machine dans le centre de roue supposé de chaque roue, où un axe X décrit une étendue verticale, un axe Y une étendue horizontale et un axe Z l'étendue en profondeur de la roue qui en résulte ;
c) La mesure de la distance entre les deux parties arrière des roues et la détermination de la position Z = 0 sur chaque partie arrière de roue ;
d) La détermination d'une position Z unique depuis les points de mesure Za et Zb des deux roues, à une distance des positions Z égale à 0, les points de mesure Za et Zb étant situés dans la zone centrale de la roue, à la même position Z des systèmes de coordonnées des deux roues et aux points zéro respectifs de l'axe X par rapport à un axe de machine, au moins virtuel ;
e) Le positionnement d'un capteur de mesure à la position Z obtenue depuis les points de mesure Za et Zb ;
f) La mesure des positions X pour les positions Z obtenues depuis les points de mesure Za et Zb ;
g) La détermination d'une différence ΔX par rapport aux positions X pour les positions Z obtenues depuis les points de mesure Za et Zb :
h) L'alignement de l'essieu monté en déplaçant verticalement l'une des roues de façon à aligner les positions X des points de mesure Za et Zb des deux roues, avec ΔX = 0.

2. Procédé selon la revendication 1, **caractérisé par le fait que** la position Z d'un point de mesure définit un cercle de mesure.

3. Procédé selon l'une des revendications précédentes, **caractérisé par le fait que** le sommet d'un arrondi de boudin est défini comme la position Z.

4. Procédé selon l'une des revendications précédentes, **caractérisé par le fait que** la roue la plus haute est abaissée pour ajuster les positions X des points de mesure des deux roues.

5. Procédé selon l'une des revendications 1 à 3, **caractérisé par le fait que** la roue la plus basse est soulevée pour ajuster les positions X des points de mesure des deux roues.
